Europäisches Patentamt

(19) European Patent Office

Office européen des brevets

(11) Veröffentlichungsnummer: **0 222 851**

**B1**

(12) **EUROPÄISCHE PATENTSCHRIFT**

(45) Veröffentlichungstag der Patentschrift:
29.06.88

(21) Anmeldenummer: **86903307.6**

(22) Anmeldetag: **02.05.86**

(86) Internationale Anmeldenummer:
**PCT/EP 86/00258**

(87) Internationale Veröffentlichungsnummer:
**WO 86/06657 (20.11.86 Gazette 86/25)**

(51) Int. Cl.⁴: **B 05 D 1/02,** B 09 B 5/00,
B 05 B 15/12

(54) VERFAHREN ZUR ZURÜCKGEWINNUNG VON WERTSTOFFEN AUS LACKSCHLAMM.

(30) Priorität: **10.05.85 DE 3516881**

(43) Veröffentlichungstag der Anmeldung:
**27.05.87 Patentblatt 87/22**

(45) Bekanntmachung des Hinweises auf die Patenterteilung:
**29.06.88 Patentblatt 88/26**

(84) Benannte Vertragsstaaten:
**AT BE CH DE FR GB IT LI LU NL SE**

(56) Entgegenhaltungen:
**EP-A-0 081 167**
**EP-A-0 119 079**
**DE-A-2 531 748**
**DE-A-3 332 457**
**US-A-2 315 125**
**US-A-3 736 277**

**Patents Abstracts of Japan, Band 4, Nr. 34, 22
March 1980, p. 82 (C03) (516)**

(73) Patentinhaber: **RUDROFF, Wolf- Dietrich, Im
Passkamp 44, D-4350 Recklinghausen (DE)**

(72) Erfinder: **RUDROFF, Wolf- Dietrich, Im Passkamp
44, D-4350 Recklinghausen (DE)**

(74) Vertreter: **Behrendt, Arne, Dipl.- Ing., Am
Waldschlösschen 11, D-4630 Bochum- Weitmar
(DE)**

## Beschreibung

Die Erfindung betrifft ein Verfahren zur Zurückgewinnung von Wertstoffen aus Lackschlamm, der neben Lösungsmittel, Bindemittel und Hilfsstoffen bis zu 50 Vol.-% Feststoffe in Form von anorganischen und/oder organischen Pigmenten und/oder Füllstoffen enthält. Solcher Lackschlamm fällt bei Lackierungsarbeiten in Lackieranlagen als sogenannter Overspray in großen Mengen an. Die allein in der Bundesrepublik Deutschland anfallende Menge an Lackschlamm liegt bei ca. 150.000 t pro Jahr.

Der bei den Lackierungsarbeiten anfallende Lackschlamm hat im Mittel etwa die gleiche Zusammensetzung wie der verwendete Lack. Er besteht demnach etwa zu 33 % aus Bindemitteln (Filmbildner wie Zellulosenitrat, Vinylchlorid-Vinylacetat-Chopolymer, ungesättigtes Polyesterharz, Ekpoxidharz etc.) zu 27 % aus Lösungsmitteln (niedrig-, mittel- oder hochsiedende organische Substanzen wie zum Beispiel Benzol, Xylol, Tetrachlorkohlenstoff, Alkohol etc.), zu 26 % aus Pigmenten (feingemahlene, organische oder anorganische, im Lack dispergierte Feststoffe, die dem Lack Farbigkeit, Deckkraft und oft auch Beständigkeit verleihen) und zu 14 % aus Farbstoffen, Füllstoffen (zum Beispiel Schwerspat, Kreide, Kaolin, etc.) und aus Hilfsstoffen (Stoffe, die die Eigenschaft des Lackes im Hinblick auf die Verarbeitbarkeit und Beständigkeit verbessern).

Da die Deponie von solchem Lackschlamm auf Sondermülldeponien teuer ist (ca. DM 400,- pro Tonne) und die Verbrennung von Lackschlamm wegen der dabei entstehenden giftigen Abgase und Stäube problematisch ist, sucht man seit längerer Zeit nach geeigneten Recyclingverfahren. Ein solches Verfahren offenbart beispielsweise die japanische Offenlegungsschrift Sho 55-8810, aus der es bekannt ist, den Lackschlamm bei 100 bis 250° C zu trocknen, die dabei entweichenden flüchtigen Bestandteile zurückzugewinnen und die verbleibende feste Masse zu einem Granulat aufzumahlen, welches beispielsweise als Zuschlagstoff bei der Betonherstellung verwendet werden kann. Der Wert des zurückgewonnenen Lösungsmittels und des Granulates ist allerdings so gering, daß die Erlöse die Mehrkosten des Recyclingverfahrens nicht zu tragen vermögen.

Falls in der Lackieranlage fortlaufend mit ein und derselben Lacksorte in einer Farbe gearbeitet wird, ist es natürlich auch möglich, den Overspray in verarbeitungsfähigem Zustand zu belassen und mit geeigneten Mitteln aufzufangen, mit Lösungsmitteln zu verdünnen und erneut in der Lackieranlage einzusetzen. Dies ist natürlich in Lackieranlagen mit wechselndem Farbprogramm und damit in der überwiegenden Zahl der praktischen Einsatzfälle nicht möglich. In diesen Fällen entsteht nämlich aus dem Overspray ein Farbgemisch, welches die Wiederverwendung in aller Regel unmöglich macht.

Aufgabe der Erfindung ist es deshalb, aus dem Lackschlamm Wertstoffe mit hohem Wiederverkaufswert, insbesondere das teure Bindemittel (Filmbildner) zurückzugewinnen.

Zur Lösung dieser Aufgabe schlägt die Erfindung vor, daß zur Zurückgewinnung vom Bindemittel die kinematische Viskosität des Lackschlamms durch Zugabe von bis zu 50 Vol.-% Lösungsmittel und/oder durch Erwärmung bis zu 60° C auf weniger als 1 cm²/s (100 cSt) herabgesetzt wird und daß der Feststoffgehalt des verflüssigten Lackschlammes zunächst in einer Dekantierzentrifuge mit einer Zentrifugalbeschleunigung bis zu 4000 g und anschließend in einem Zentrifugalseparator mit einer Zentrifugalbeschleunigung bis zu 14000 g auf weniger als 3 Vol.-% abgesenkt wird.

Obwohl der Lack bei seiner Herstellung so zusammengesetzt wird, daß die Feststoffe nicht oder nur sehr schwer aussedimentieren, hat sich überraschender Weise herausgestellt, daß man die in dem Lackschlamm reichlich vorhandenen Feststoffe, d.h. vor allem die Pigmente, mit relativ einfachen mechanischen Trennverfahren weitestgehend aus dem Lackschlamm entfernen kann, wenn man die Viskosität auf ein bestimmtes Maß herabsetzt und ein zweistufiges Trennverfahren mit bestimmten Sedimentationszentrifugen anwendet, bei welchem in der ersten Stufe bei geringerer Zentrifugalbeschleunigung besonders die anorganichen Pigmente und in der darauffolgenden Stufe bei höherer Zentrifugalbeschleunigung die verbleibenden, vorwiegend organischen Pigmente bis auf einen kleinen Rest von maximal 3 Vol.-% abgeschieden werden. Der Klarablauf des Zentrifugalseparators ist verwendbar zur Herstellung eines Recyclinglackes mit einem Marktwert von 40 bis 60 % der entsprechenden Ausgangsprodukte.

Für höhere Qualitätsansprüche sieht eine zweckmäßige Weiterbildung des Verfahrens gemäß der Erfindung vor, daß der Klarablauf des Zentrifugalseparators zusätzlich einer Oberflächen-Siebfiltration mit einer definierten Porengröße mit maximal 1,6 µm, vorzugsweise 0,3 bis 1 µm unterzogen wird. Eine solche Oberflächen-Siebfiltration ermöglicht es, den Feststoffgehalt bis auf kaum noch meßbare Spuren abzusenken. Das so zurückgewonnene Bindemittel hat nahezu 100 % Marktwert. Durch die Verwendung eines Filtermittels mit definierter Porengröße wird einerseits sichergestellt, daß alle Bestandteile der Flüssigkeit das Filtermittel ungehindert passieren können und daß die Gefahr einer Verstopfung des Filtermittels durch eindringende feststoffpartikel entfällt. Außerdem erfolgt die Oberflächen-Siebfiltration kontinuierlich.

Zweckmäßig werden als Filtermittel mit Flüssigkeit und/oder Gas rückspülbare Filter aus Glas, insbesondere Bor-Silicatglas, Metall oder hochpolymerem Kunststoff verwendet. Solche Filter haben einerseits die erforderliche mechanische Festigkeit für eine Druckfiltration und sind darüberhinaus ausreichend unempfindlich gegen die auftretenden Temperaturen und aggressive Rückspülmittel und Lösungsmittel, so daß das Filtrationssystem leicht zu regenerieren ist und eine ausreichende Standzeit hat.

Falls der Klarablauf des Zentrifugalseparators oder der Klarablauf der Oberflächen-Siebfiltration für die Weiterverarbeitung zu viele Lösungsmittel enthält, kann man nach einem weiteren Merkmal der Erfindung die überschüssigen Mengen an Lösungsmittel entfernen.

Zur schonenden Abtrennung des Bindemittels von dem überschüssigen Lösungsmittel wird zweckmäßig ebenfalls ein Zentrifugalseparator verwendet. Überraschender Weise hat sich herausgestellt, daß man bei den leicht angehobenen Temperaturen, bei welchen das Verfahren gemäß der Erfindung durchgeführt wird, mit einem Zentrifugalseparator auch die Trennung von Lösungsmittel und Bindemittel wirkungsvoll durchführen kann, und zwar ohne das Bindemittel zusätzlich thermisch zu belasten und dadurch zu beschädigen.

Da der Feststoffausstoß des Zentrifugalseparators, insbesondere bei Verwendung eines Düsenseparators infolge der gleichzeitigen Austragung von Lösemittel-Bindemittel-Gemisch relativ niedrig konzentriert ist, ist einerseits zwecks hoher Konzentration des Feststoffaustrages und andererseits zwecks Verhinderung von Bindemittelverlusten eine vollständige oder teilweise Rezirkulation zur Dekantierzentrifuge und/oder zum Zentrifugalseparator vorgesehen. Hierdurch gelangt das Bindemittel zusammen mit den im Zentrifugalseparator abgeschiedenen Feststoffmengen erneut in den Kreislauf und durchläuft den Trennprozess noch einmal.

Um auch die abgeschiedenen Feststoffe einer sinnvollen Verwendung zuführen zu können, werden diese getrocknet und zu einem Granulat vermahlen, weiches für verschiedene Zwecke als Füllstoff, beispielsweise als Zuschlag für Beton, verwendet werden kann.

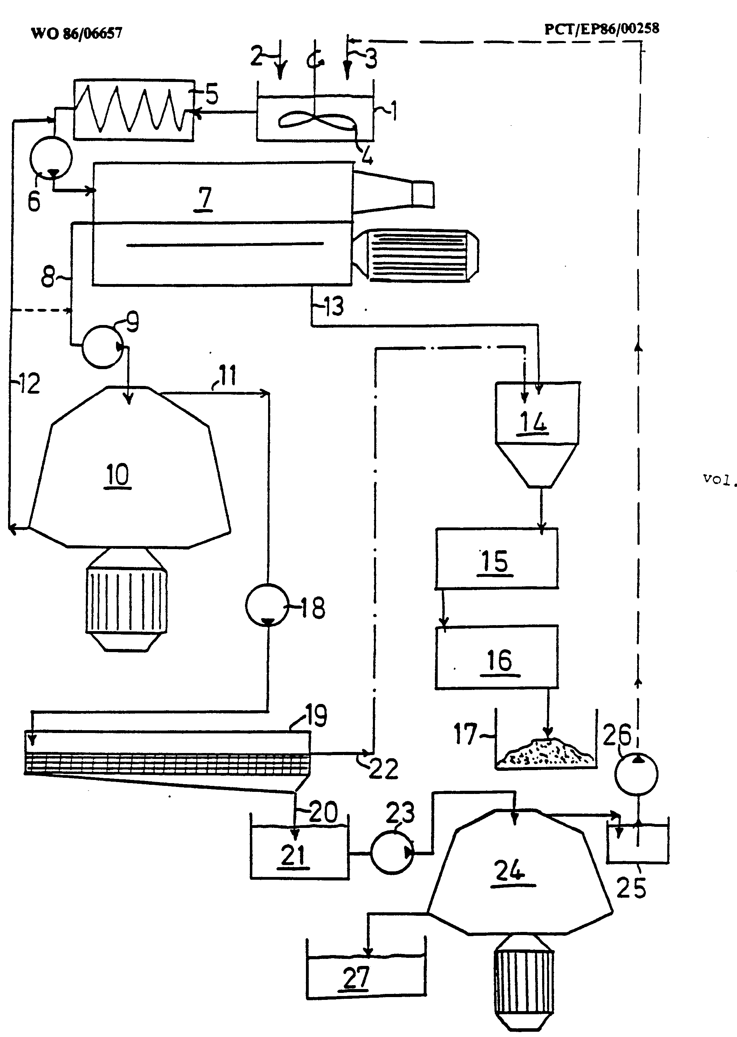

Ein Ausführungsbeispiel der Erfindung wird im folgenden anhand der Zeichnung näher erläutert, in der ein Blockschaltbild es Verfahrens gemäß der Erfindung dargestellt ist.

In der Zeichnung ist ein Mischbehälter mit dem Bezugszeichen 1 bezeichnet. In diesen Mischbehälter wird, wie durch die Pfeile 2 und 3 angedeutet, einerseits der aufzubereitende Lackschlamm 2 und andererseits ein geeignetes Lösungsmittel 3 gegeben und mit Hilfe eines Rührwerkes 4 vermischt. Durch die Verdünnung mit bis zu 50 Vol.-%, vorzugsweise 30 Vol.-% Lösungsmittel und/oder die Erwärmung in einem dem Mischbehälter nachgeschalteten Wärmetauscher 5 auf bis zu 60°C, vorzugsweise 35°C, wird die kinematische Viskosität des Lackschlammes auf weniger als 1 cm²/s (100 cSt), vorzugsweise auf 40 bis 70 cm²/s (cSt) herabgesetzt.

Der durch Verdünnung und/oder Erwärmung verflüssigte Lackschlamm aus dem Mischbehälter wird dann mittels einer Dosierpumpe 6 einer kontinuierlich arbeitenden Dekantierzentrifuge 7 zugeleitet, deren Zentrifugalbeschleunigung bis zu 4000 g, vorzugsweise 2000 bis 3000 g beträgt. In dieser Dekantierzentrifuge 7 wird aus dem Lackschlamm der größte Teil der darin enthaltenen anorganische Pigmente abgeschieden. Der Klarablauf 8 der Dekantierzentrifuge 7 enthält nur noch deutlich reduzierte Feststoffmengen. Zur Entfernung dieser verbliebenen Feststoffmengen wird der Klarablauf 8 der Dekantierzentrifuge 7 mittels einer Dosierpumpe 9 einem Zentrifugalseparator 10 zugeführt, dessen Zentrifugalbeschleunigung bis zu 14000 g, vorzugsweise 6000 bis 10000 g beträgt. Im Klarablauf 11 dieses Zentrifugalseparators 10 beträgt der Feststoffgehalt noch maximal 3 Vol.-%, vorzugsweise 0,1 bis 1,5 Vol.-%. Mit einem solchen Festsoffanteil ist dieser Klarablauf 11 bereits zur Herstellung eines Recyclinglackes verwendbar und hat einen Marktwert von etwa 40 bis 60 %.

Der Feststoffausstoß 12 des Zentrifugalseparators ist an den Zulauf der Dekantierzentrifuge 7 und/oder des Zentrifugalseparators 10 angeschlossen. Auf diese Weise werden die in dem Feststoffausstoß 12 enthaltenen Bindemittelanteile dem Trennverfahren erneut zugeführt, so daß einerseits Bindemittelverluste vermieden werden und andererseits eine Höherkonzentration der Feststoffaustragung erreicht wird.

Der Feststoffausstoß 13 der Dekantierzentrifuge 7 ist an ein Sammelgefäß 14 angeschlossen, aus welchem der Feststoff einem Trockner 15 zugeführt wird, dem ein Mahlwerk 16 nachgeschaltet ist. Das Mahlwerk 16 verläßt der abgeschiedene Feststoff in Form eines Granulats, welches in einem Auffangbehälter 17 aufgefangen wird. Dieses Granulat kann beispielsweise als Zuschlagsstoff bei der Betonherstellung verwendet werden.

Falls an den herzustellenden Recyclinglack sehr hohe Anforderungen gestellt werden, kann der Klarablauf 11 einer Nachreinigung in einer Oberflächen-Siebfiltration unterzogen werden. Hierzu wird der Klarablauf 11 mittels Dosierpumpen 18 einer Siebeinrichtung 19 zugeführt. Diese Siebeinrichtung 19 enthält mit Flüssigkeit und/oder Gas rückspülbare Filtermittel aus Bor-Silicatglas mit einer definierten Porengröße von maximal 1,6 μm, vorzugsweise 0,3 bis 1 μm. Der Klarablauf 20 dieser Oberflächen-Siebfiltration enthält nur noch Spuren von Feststoffen und hat demnach nahezu 100 % Marktwert. Er wird in einem Sammelgefäß 21 gesammelt.

Der Filterrückstand 22 der Oberflächen-Siebfiltration wird demgegenüber dem Feststoffbehälter 14 zugeführt.

Falls im Klarablauf 20 der Siebfiltration zuviel Lösungsmittel enthalten ist, wird das überschüssige Lösungsmittel entfernt. Hierzu wird die Flüssigkeit aus dem Behälter 21 mittels einer Dosierpumpe 23 einem Zentrifugalseparator 24 zugeführt, in welchem ein großer Teil des noch enthaltenen Lösungsmittels in Form eines Gases abgetrennt wird. Das in dem Zentrifugalseparator 24 abgetrennte Lösungsmittelgas wird kondensiert, in einem Sammelgefäß 25 gesammelt und gegebenenfalls mittels einer Dosierpumpe 26 wieder dem Mischbehälter 1 zugeführt. Das aus dem Zentrifugalseparator 24 abfließende Endprodukt wird in einem Sammelbehälter 27 gesammelt.

Falls die Oberflächen-Siebfiltration nicht stattfindet und bereits der Klarablauf 11 des Zentrifugalseparators 10 ausreichend gereinigt ist, kann der zusätzliche Zentrifugalseparator 24 gegebenenfalls auch direkt an den Klarablauf 11 angeschlossen sein. Diese Variante ist allerdings in der Zeichnung nicht im einzelnen dargestellt.

Um zu vermeiden, daß das zugefügte Lösungsmittel bereits in der Dekantierzentrifuge 7 bzw. dem Zentrifugalseparator 10 abgeschieden wird, arbeiten diese Zentrifugen in einem geschlossenem System unter Überdruck. Demgegenüber arbeitet der Zentrifugalseparator 24 druckentlastet, so daß das Lösungsmittel gasförmig aus dem Gemisch austritt.

## Patentansprüche

1. Verfahren zur Zurückgewinnung von Wertstoffen aus Lackschlamm, der neben Lösungsmittel, Bindemittel und Hilfsstoffen bis zu 50 Vol.% Feststoffe in Form von anorganischen und/oder organischen Pigmenten und/oder Füllstoffen enthält,
   dadurch gekennzeichnet,
   daß zur Zurückgewinnung vom Bindemittel die kinematische Viskosität des Lackschlammes durch Zugabe von bis zu 50 Vol.-% Lösungsmittel und/oder durch Erwärmung bis zu 60°C auf weniger als 1 cm²/s (100 cSt) herabgesetzt wird und daß der Feststoffgehalt des verflüssigten Lackschlammes zunächst in einer Dekantierzentrifuge (7) mit einer Zentrifugalbeschleunigung bis zu 4000 g und anschließend in einem Zentrifugalseparator (10) mit einer Zentrifugalbeschleunigung bis zu 14000 g auf weniger als 3 Vol.% abgesenkt wird.

2. Verfahren nach Anspruch 1, dadurch gekennzeichnet, daß der Klarablauf (11) des Zentrifugalseparators zusätzlich einer Oberflächen-Siebfiltration mit einer definierten Porengröße von maximal 1,6 μm, vorzugsweie 0,3 bis μm unterzogen wird.

3. Verfahren nach Anspruch 2, dadurch gekennzeichnet, daß als Filtermittel mit Flüssigkeit und/oder Gas rückspülbare Filter aus Glas, insbesondere Bor-Silicatglas, Metall oder hochpolymeren Kunststoff verwendet werden.

4. Verfahren nach den Ansprüchen 1 oder 2, dadurch gekennzeichnet, daß aus dem Klarablauf (11) des Zentrifugalseparators (10) oder aus dem Klarablauf (20) der Oberflächen-Siebfiltration das überschüssige Lösungsmittel entfernt wird.

5. Verfahren nach Anspruch 4, dadurch gekennzeichnet, daß die Trennung von Bindemittel und Lösungsmittel in einem Zentrifugalseparator (24) erfolgt.

6. Verfahren nach einem oder mehreren der Ansprüche 1 bis 4, dadurch gekennzeichnet, daß der Feststoffausstoß (12) des Zentrifugalseparators (10) an den Zulauf der Dekantierzentrifuge (7) und/oder des Zentrifugalseparators (10) angeschlossen ist.

7. Verfahren nach einem oder mehreren der Ansprüche 1 bis 5, dadurch gekennzeichnet, daß die abgeschiedenen Feststoffe getrocknet und zu einem Granulat vermahlen werden.

## Claims

1. A process for the recovery of valuable substances from paint slurry which besides solvent, binding agent and additives contains up to 50 % by volume of solid matter in the form of organic and/or inorganic pigments and/or fillers, characterised in that for the recovery of the binding agent the kinematic viscosity of the paint slurry is reduced to less than 1 cm²/s (100 cSt) by the addition of up to 50 % by volume of solvent and/or by heating up to 60°C, and that the solids content of the thinned paint slurry is reduced to less than 3 % by volume firstly in a decanting centrifuge (7) with a centrifugal acceleration of up to 4000 g and then in a centrifugal separator (10) with a centrifugal acceleration of up to 14000 g.

2. A process according to claim 1 characterised in that the clear discharge (11) of the centrifugal separator is additionally subjected to a surface sieve filtration operation with a defined pore size of a maximun of 1.6 μm, preferably 0.3 to 1 μm.

3. A process according to claim 2 characterised by using as the filter means filters which can be back-flushed with liquid and/or gas, comprising glass, in particular boron silicate glass, metal or highpolymer plastics material.

4. A process according to claim 1 or claim 2 characterised in that the excess solvent is removed from the clear discharge (11) of the centrifugal separator (10) or from the clear discharge (20) of the surface sieve filtration operation.

5. A process according to claim 4 characterised in that separation of the binding agent and the solvent is effected in a centrifugal separator (24).

6. A process according to one or more of claims 1 to 4 characterised in that the solids discharge (12) of the centrifugal separator (10) is connected to the feed of the decanting centrifuge (7) and/or the centrifugal separator (10).

7. A process according to one or more of claims 1 to 5 characterised in that the solids which are separated off are dried and crushed to provide a granulate.

## Revendications

1. Procédé pour la récupération de produits de valeur à partir d'une boue de vernis qui, outre un solvant, un liant et des adjuvants, contient jusqu'à 50 % en volume de produits solides sous forme de pigments minéraux et/ou organiques et/ou de charges, caractérisé en ce que, pour la récupération du liant, la viscosité cinématique de la boue de vernis est abaissée jusqu'à moins de 1 cm$^2$/s (100 cSt) par addition de jusqu'à 50 % en volume de solvant et/ou par un chauffage jusqu'à 60°C et en ce que la teneur en produits solides de la boue de vernis fluidifiée est abaissée jusqu'à moins de 3 % en volume d'abord dans une centrifugeuse à décantation (7) avec une accélération centrifuge de jusqu'à 4 000 g puis dans un séparateur centrifuge (10) avec une accélération centrifuge de jusqu'à 14 000 g.

2. Procédé selon la revendication 1, caractérisé en ce que l'effluent clair (11) du séparateur centrifuge est soumis en outre à une filtration superficielle dans un filtre-tamis avec une dimension de pores définie d'au plus 1,6 μm, de préférence de 0,3 à 1 μm.

3. Procédé selon la revendication 2, caractérisé en ce que l'on utilise en tant qu'agent filtrant un filtre en verre, en particulier en verre de borosilicate, en métal ou en un haut polymère, lavable à contre-courant avec un liquide et/ou un gaz.

4. Procédé selon les revendications 1 ou 2, caractérisé en ce que le solvant en excès est retiré de l'effluent clair (11) du séparateur centrifuge (10) ou de l'effluent clair (20) de la filtration superficielle sur filtre-tamis.

5. Procédé selon la revendication 4, caractérisé en ce que la séparation du liant et du solvant a lieu dans un séparateur centrifuge (24).

6. Procédé selon une ou plusieurs des revendications 1 à 4, caractérisé en ce que les produits solides (12) sortant du séparateur centrifuge (10) rejoignent l'alimentation de la centrifugeuse à décantation (7) et/ou du séparateur centrifuge (10).

7. Procédé selon une ou plusieurs des revendications 1 à 5, caractérisé en ce que les produits solides séparés sont séchés et sont broyés en un granulat.

vol.